# EUROPÄISCHE PATENTSCHRIFT

(11) **EP 3 219 569 B1**
(45) Veröffentlichungstag und Bekanntmachung des Hinweises auf die Patenterteilung: **28.08.2024**
(21) Anmeldenummer: 17160360.8
(22) Anmeldetag: 10.03.2017
(51) Int. Cl.: B60W 50/12, B60W 50/14, B60W 30/09, B60W 30/095

(54) **VERFAHREN ZUM VERMEIDEN EINER KOLLISION EINES FAHRZEUGS MIT EINEM OBJEKT UNTER BERÜCKSICHTIGUNG EINES FAHRSTUFENWECHSELS DES FAHRZEUGS UND FAHRERASSISTENZSYSTEM**
METHOD FOR PREVENTING THE COLLISION OF A VEHICLE WITH AN OBJECT, TAKING ACCOUNT OF A SPEED CHANGE OF THE VEHICLE AND DRIVER ASSISTANCE SYSTEM
PROCÉDÉ PERMETTANT D'ÉVITER LA COLLISION ENTRE UN VÉHICULE AUTOMOBILE ET UN OBJET EN TENANT COMPTE D'UN CHANGEMENT DE VITESSE DU VÉHICULE ET SYSTÈME D'AIDE AU CONDUCTEUR

(30) Priorität: 14.03.2016 DE 102016104567
(43) Veröffentlichungstag der Anmeldung: 20.09.2017
(73) Patentinhaber: Valeo Schalter und Sensoren GmbH, 74321 Bietigheim-Bissingen (DE)
(72) Erfinder: Santos Marcial, Erfrain, 74321 Bietigheim-Bissingen (DE); Haenisch, Stephan, 74321 Bietigheim-Bissingen (DE)
(74) Vertreter: Pothmann, Karsten

(56) Entgegenhaltungen:
- DE-A1- 102006 044 803
- DE-A1- 102010 025 797
- DE-A1- 102010 033 544
- DE-A1- 102010 035 978
- DE-A1- 102012 008 660
- DE-A1- 102013 106 604
- DE-A1- 3 637 165
- JP-A- 2002 269 697
- US-A1- 2010 023 234

## Beschreibung

Die Erfindung betrifft ein Verfahren zum Vermeiden einer Kollision eines Fahrzeugs mit einem Objekt in einem Umgebungsbereich des Fahrzeugs, bei welchem abhängig von einem Erfülltsein eines Kollisionskriteriums ein Durchführen einer Kollisionsvermeidungsaktion entschieden wird. Des Weiteren betrifft die Erfindung auch ein Fahrerassistenzsystem.

Aus dem Stand der Technik sind Strategien und Fahrerassistenzsysteme bekannt, die Objekte im Umgebungsbereich eines Fahrzeugs erfassen können. Abhängig davon können dann verschiedenste Handlungen vorgenommen werden. Es ist darüber hinaus auch bekannt, dass nicht nur Objekte in der Umgebung eines Fahrzeugs erfasst werden, um beispielsweise einen Parkvorgang sicher durchzuführen, sondern es sind auch Fahrerassistenzsysteme bekannt, die konkret eine Kollisionsmöglichkeit mit einem Objekt erfassen und dann entsprechende Handlungen vorgenommen werden, um diese Kollision zu vermeiden.

Es ist beispielsweise aus der JP 0004 280 489 ein Kollisionsvermeidungssystem bekannt, bei welchem dann, wenn ein Abstandsschwellwert des Fahrzeugs zu dem Objekt unterschritten wird, das Fahrzeug automatisch gestoppt wird oder mit einer geringeren Geschwindigkeit weiterbewegt wird. Dadurch soll ein Fortbewegen unterbunden werden oder zumindest eine Beschleunigung beim weiteren Fortbewegen unterbunden werden.

Die JP 2002 269697 A zeigt eine Verfahren für ein Fahrzeug zur Vermeidung von Kollisionen mit Objekten. Dabei wird die antizipierte Fahrtrichtung des Eigenfahrzeugs auf Kollision mit Objekten überprüft. Weiterhin wird bei Vorliegen einer Objektdetektion bestimmt, ob eine Kollision vermieden werden kann.

Die DE 10 2010 035 978 A1 zeigt ein Verfahren zur Unterstützung eines Fahrers eines Fahrzeugs, wobei ein für den Fahrer wahrnehmbares Warnsignal beim Einlegen eines Vorwärts- oder Rückwärtsgangs aus einer Park- oder Neutralstellung eines Gangwahlhebels ausgelost wird, wenn folgende Bedingungen gleichzeitig erfüllt sind: das Fahrzeug ist in Betrieb genommen und steht, in einer gemäß eingelegtem Vorwärts- oder Rückwärtsgang gewählten Fahrtrichtung wird mittels einer am Fahrzeug entsprechend angeordneten Umgebungserfassungseinheit kein Freiraum einer vorgegebenen Mindestgröße ermittelt, und in einer zur gewählten Fahrtrichtung entgegen gesetzten Richtung wird mittels einer am Fahrzeug entsprechend angeordneten Umgebungserfassungseinheit ein Freiraum mit einer vorgegebenen Mindestgröße oder ein sich vergrößernder Freiraum ermittelt.

Das aus dem Stand der Technik bekannte Vorgehen ermöglicht jedoch nur bedingt eine Kollisionsvermeidung beziehungsweise unerwünschte Szenarien, wie sie beispielsweise bei einem unvorhergesehenen Handeln eines Fahrzeugführers auftreten können, werden nicht vermieden.

Es ist Aufgabe der vorliegenden Erfindung, ein Verfahren, ein Fahrerassistenzsystem sowie ein Kraftfahrzeug zu schaffen, mit welchem beziehungsweise bei welchem die Kollisionsvermeidung eines Fahrzeugs mit einem Objekt in einem Umgebungsbereich des Fahrzeugs verbessert ist.

Diese Aufgabe wird durch ein Verfahren und ein Fahrerassistenzsytem gemäß den unabhängigen Ansprüchen gelöst.

Bei einem erfindungsgemäßen Verfahren zum Vermeiden einer Kollision eines Fahrzeugs mit einem mit einer Erfassungseinheit eines Fahrerassistenzsystems des Fahrzeugs erfassbaren Objekt in einem Umgebungsbereich des Fahrzeugs wird abhängig von einem Erfülltsein eines Kollisionskriteriums ein Durchführen einer Kollisionsvermeidungsaktion entschieden. Es ist insbesondere vorgesehen, dass ein Wechsel einer Fahrstufe des Fahrzeugs durchgeführt wird. Als Kollisionskriterium wird der Fahrstufenwechsel automatisch und somit durch ein Fahrerassistenzsystem ausgewertet und es wird dazu dann durch das Fahrerassistenzsystem überprüft, ob die dann mit der beim Wechsel eingelegten beziehungsweise gewählten Fahrstufe einhergehende Fortbewegungsrichtung des Fahrzeugs in Richtung eines im Umgebungsbereich des Fahrzeugs erfassten Objekts ist. Dieses Überprüfen beziehungsweise das daraus resultierende Überprüfungsergebnis wird für eine Entscheidung, ob die Kollisionsvermeidungsaktion automatisch und somit durch ein Fahrerassistenzsystem durchgeführt wird, berücksichtigt. Ein wesentlicher Punkt der Erfindung ist, dass auch tatsächlich ein Fahrstufenwechsel stattfindet und dieser dann im Hinblick auf eine mögliche daraus resultierende Kollision mit einem dann gegebenenfalls erfolgenden Fortbewegen des Fahrzeugs mit einem Objekt berücksichtigt wird.

Da sich gerade bei menschlichen beziehungsweise irrtümlichen beziehungsweise nicht gewollten Fahrstufenwechseln einer Fahrstufe durch einen Fahrzeugführer Verkehrssituationen ergeben können, auf die auch der Fahrzeugführer dann konsequenterweise nicht vorbereitet ist oder mit denen er nicht rechnet, ist es gerade dann von besonderer Vorteilhaftigkeit, wenn ein derartiger Fahrstufenwechsel im Hinblick auf eine daraus resultierende Kollisionsmöglichkeit mit einem Objekt in dem Umgebungsbereich des Fahrzeugs ausgewertet wird. Gerade bei derartigen Situationen, aus denen sich dann gegebenenfalls im Nachfolgenden ein Fortbewegen des Fahrzeugs ergibt, mit dem dann auch konsequenterweise der Fahrzeugführer nicht rechnet, entstehen hier besonders kritische Situationen für eine mögliche Kollision. Dies insbesondere dahingehend, dass der Fahrzeugführer dann gegebenenfalls zu spät reagiert, insbesondere aufgrund des sich gegebenenfalls eintretenden Schrecks, wenn sich das Fahrzeug in eine Richtung bewegt, mit der der Fahrzeugführer grundsätzlich gar nicht rechnet. Da auch in derartigen Situationen logischerweise die Reaktionszeit und somit auch das Reaktionsvermögen des Fahrzeugführers verspätet auftritt oder gar nicht auftritt oder gegebenenfalls sogar dann noch eine eine Kollision verschärfend herbeiführende Handlung des Fahrzeugführers erfolgt, ist durch das oben genannte Szenario auch eine deutliche Verbesserung im Hinblick auf die Sicherheit einer Kollisionsvermeidung gegeben.

Es wird somit insbesondere zunächst eine Handlung des Fahrzeugführers selbst durchgeführt, die vom Fahrzeugführer nicht gewollt ist bzw. nicht bewusst als gegenüber seinem tatsächlich gewollten Handeln abweichendes Handeln von ihm wahrgenommen wird. Hierbei können sich dann besonders kritische Situationen bezüglich einer Kollision ergeben. Diese Handlung kann beispielsweise eine falsche und nicht gewollte Fahrstufenwahl oder ein ungewolltes Betätigen eines Gaspedals des Fahrzeugs durch den Fahrzeugführer sein, beispielsweise wenn er mit einem Fuß von einem Bremspedal abrutscht und aufs Gaspedal rutscht und dies dann ungewollt betätigt.

Es wird bei dem Verfahren insbesondere auch die relative Position eines Objekts in einem Umgebungsbereich des Fahrzeugs zum Fahrzeug bestimmt, um dann im Hinblick darauf eine Aussage treffen zu können, ob das Objekt in Richtung der zukünftigen Fortbewegungsrichtung des Fahrzeugs, die sich aufgrund des Fahrstufenwechsels ergibt, befindet.

Es ist vorgesehen, dass für die Entscheidung, ob eine Kollisionsvermeidungsaktion eingeleitet und durchgeführt wird, zusätzlich zum Überprüfungsergebnis des Kollisionskriteriums ein Erfülltsein eines weiteren Zusatzkriteriums berücksichtigt wird. Durch einen derartigen mehrstufigen Entscheidungsprozess kann die Beurteilung vielfältigster Verkehrssituationen als auch die Beurteilung über sich dann jeweils in der Zeitfolge ergebende Veränderungen einer Verkehrssituation bestmöglich und vielfältig sowie genau erfolgen. Dadurch kann die wesentlich bedarfsgerechtere und situationsabhängige Beurteilung unterschiedlichster Verkehrssituationen und somit Ausgangssituationen für eine derartige Entscheidung erfolgen und jeweils eine feindosiertere und bestmöglich daran angepasste Entscheidungsfindung, ob und gegebenenfalls wie eine Kollisionsvermeidungsaktion durchgeführt wird, erfolgen

Es ist vorgesehen, dass als Zusatzkriterium ausgewertet wird, ob eine Drehmomentänderung einer Antriebseinheit des Fahrzeugs nach dem Wechsel der Fahrstufe einen Drehmomentänderungsschwellwert überschreitet oder gleich diesem Drehmomentänderungsschwellwert ist. Es wird dann, wenn die mit dem Fahrstufenwechsel einhergehende Fortbewegungsrichtung des Fahrzeugs in Richtung des Objekts führt und die Drehmomentänderung den Drehmomentänderungsschwellwert überschreitet, die Kollisionsvermeidungsaktion durchgeführt. Dies ist eine ganz besonders vorteilhafte Ausführung, da dann, wenn mit dem Fahrstufenwechsel das Fahrzeug sich im Stillstand befindet, im Nachgang, insbesondere innerhalb eines vorgegebenen Zeitintervalls, dann eine unerwünscht abrupte Betätigung des Gaspedals erfolgt, die mit dann einem entsprechenden abrupten hohen Drehmomentänderungswert einhergeht, darauf geschlossen werden kann, dass hier ein Fahrmanöver vorliegt, welches besonders kritisch für eine mögliche Kollision mit einem Objekt ist. Dies kann beispielsweise insbesondere dann auftreten, wenn ein Fahrzeugführer abgelenkt ist und mit einem Fehlverhalten unerwünscht das Gaspedal relativ stark betätigt und somit relativ stark insbesondere durchdrückt, sodass das Fahrzeug sich dann auch abrupt in die durch die Fahrstufe bedingte Fortbewegungsrichtung bewegt. Um derartige unkontrollierte abrupte Fortbewegungen in Richtung eines Objekts bezüglich einer Kollisionswahrscheinlichkeit mit einem Objekt zu vermeiden, wird dann, bei einem derartigen Auftreten, insbesondere unverzüglich, eine Kollisionsvermeidungsaktion durchgeführt.

Derartige unerwünschte abrupte Drehmomentänderungen einer Antriebseinheit können beispielsweise dann auftreten, wenn der Fahrzeugführer auch mit seinem Fuß abrutscht, beispielsweise von einem zum Gaspedal unterschiedlichen Pedal im Kraftfahrzeug abrutscht und auf das Gaspedal trifft und dieses dann relativ abrupt relativ stark betätigt.

Beispielsweise kann in dem Zusammenhang ein Fahrzeugführer mit seinem Fuß vom Bremspedal abrutschen und direkt auf das Gaspedal rutschen und dieses in kürzester Zeit relativ stark durchdrücken, wobei dann eine Situation herbeigerufen würde, die die Handlungsfähigkeit eines Fahrzeugführers selbst beeinträchtigen würde, da er auf eine derartige Handlung nicht vorbereitet ist. Da auch gerade in derartigen Situationen dann die Kollisionsvermeidung zu einem Objekt im zentralen Vordergrund steht, kann eine Kollision durch von derartigen Bedingungen abhängig gemachte Durchführung einer Kollisionsvermeidungsaktion vermieden werden.

Vorzugsweise wird der Drehmomentänderungsschwellwert als ein Drehmoment vorgegeben, wie er bei einem Abrutschen eines Fußes eines Fahrzeugführers von einem zum Gaspedal unterschiedlichen Pedal des Fahrzeugs auf das Gaspedal und einen damit verbundenen abrupten starken Betätigen des Gaspedals auftritt. Die daraus resultierenden Szenarien wurden bereits oben erläutert, sodass sich mit dieser vorteilhaften Ausführung die ebenfalls bereits oben dargelegten Verbesserungen der Kollisionsvermeidung ergeben.

Es kann in einer weiteren Ausführung optional zusätzlich als Zusatzkriterium ausgewertet werden, ob sich das Fahrzeug nach dem Fahrstufenwechsel tatsächlich fortbewegt und wenn ja, ob die Geschwindigkeit größer einer Schwellwertgeschwindigkeit ist. Insbesondere dann, wenn die mit dem Fahrstufenwechsel einhergehende Fortbewegungsrichtung des Fahrzeugs in Richtung des Objekts führt und die Geschwindigkeit des Fahrzeugs in diese Fortbewegungsrichtung größer der Schwellwertgeschwindigkeit ist, wird die Kollisionsvermeidungsaktion durchgeführt.

Erfindungsgemäß wird die Kollisionsvermeidungsaktion mit zumindest zwei verschiedenen Vermeidungsmöglichkeiten bereitgestellt, und abhängig von einem Auswahlkriterium wird ausgewählt, mit welcher Vermeidungsmöglichkeit und/oder mit welcher Anzahl von bereitgestellten Vermeidungsmöglichkeiten die Kollisionsvermeidungsaktion durchgeführt wird. Zusätzlich oder anstatt dazu kann vorgesehen sein, dass abhängig von dem Auswahlkriterium ausgewählt wird, in welcher Reihenfolge eine Mehrzahl von bereitgestellten Vermeidungsmöglichkeiten beim Durchführen einer Kollisionsvermeidungsaktion ausgeführt wird. Die Kollisionsvermeidungsaktion wird somit variabler und es kann dadurch nochmals individuell und bedarfsgerechter auf die jeweiligen Verkehrssituationen oder deren Änderungen im Hinblick auf eine jeweils sich dann verändernde Wahrscheinlichkeit einer Kollision zwischen dem Fahrzeug und dem Objekt eingegangen werden.

Es ist vorzugsweise vorgesehen, dass eine erste Vermeidungsmöglichkeit eine akustische und/oder optische Warnung ist und somit eine derartig spezifizierte erste Vermeidungsmöglichkeit bereitgestellt wird. Diese kann dann abhängig von dem oben genannten zumindest einen Auswahlkriterium alleine oder in Verbindung mit zumindest einer anderen weiteren Vermeidungsmöglichkeit durchgeführt werden. Dies bedeutet dann insbesondere auch, dass beispielsweise zu Beginn eines möglichen Kollisionsszenarios und somit einer zeitlich und/oder örtlich noch jeweils um einen vorgebbaren Toleranzwert beabstandeten tatsächlichen Kollision die Situation dahingehend zu beurteilen ist, dass lediglich eine akustische und/oder optische Warnung ausreicht, um den Fahrzeugführer aufmerksam zu machen.

Zusätzlich oder anstatt dazu kann als eine zweite Vermeidungsmöglichkeit ein Fortbewegen des Fahrzeugs kleiner einem vorgebbaren Fortbewegungsschwellwert auch hier durch ein Fahrerassistenzsystem des Fahrzeugs bereitgestellt werden. Eine derartige Handlung als Kollisionsvermeidungsaktion oder als zumindest ein Bestandteil davon kann dann erfolgen, wenn eine Verkehrssituation im Hinblick auf eine Kollision insbesondere bereits kritischer beurteilt wird, als es eine Verkehrssituation wäre, wenn nur eine akustische und/oder optische Warnung ausgesprochen werden soll. Durch diese konkrete zweite Vermeidungsmöglichkeit wird dann schon in vorteilhafter Weise automatisch durch das Fahrerassistenzsystem in das Fahrverhalten des Fahrzeugs eingegriffen, um bedarfsgerecht eine tatsächliche Kollision zu vermeiden.

Zusätzlich oder anstatt dazu kann als eine dritte Vermeidungsmöglichkeit ein Abbremsen des Fahrzeugs bis zum Stillstand durch ein Fahrerassistenzsystem des Fahrzeugs bereitgestellt werden. Gerade diese dritte Vermeidungsmöglichkeit kann dann insbesondere in besonders kritischen Verkehrssituationen alleine oder auch in Verbindung mit beispielsweise der ersten Vermeidungsmöglichkeit zum Tragen kommen, sodass relativ schnell und abrupt automatisch durch das Fahrerassistenzsystem reagiert wird und somit auch kurz bevorstehende mögliche Kollisionen vermieden werden können.

In einer vorteilhaften Ausführung werden beispielsweise als Auswahlkriterien ein Abstand des Objekts zum Fahrzeug und/oder eine Bewegungsrichtung des Objekts zum Fahrzeug und/oder eine Bewegungsgeschwindigkeit des Objekts zum Fahrzeug und/oder eine relative Position des Objekts zum Fahrzeug berücksichtigt. Somit können sowohl statische als auch dynamische Objekte erfasst und entsprechend beurteilt werden und es kann dann auch ein individuelles Szenario zur Kollisionsvermeidung bereitgestellt und durchgeführt werden.

Erfindungsgemäß wird eine Erfassung des Umgebungsbereichs des Fahrzeugs im Hinblick auf ein dortiges Vorhandensein eines Objekts zumindest mit dem Erfassen eines erfolgenden Fahrstufenwechsels begonnen. Bei einem Erfassen eines Objekts in dem Umgebungsbereich wird dann ausgewertet, ob das Objekt ein statisches Objekt oder ein dynamisches Objekt ist und somit, ob es sich gegenüber dem Fahrzeug bewegt oder nicht. Eine mögliche Eigenbewegung des Objekts wird somit erfasst, wodurch dann durch eine Klassifizierung des Objekts als statisches oder dynamisches Objekt eine noch genauere und somit situationsgegebenere, bedarfsgerechte Durchführung einer Entscheidung erfolgt, ob eine Kollisionsvermeidungsaktion erfolgen soll oder nicht und gegebenenfalls, wie eine Kollisionsvermeidungsaktion durchgeführt werden soll. Auch hier können dann insbesondere beim Bereitstellen von mehreren Vermeidungsmöglichkeiten wiederum die oben genannten vorteilhaften Ausführungen im Hinblick auf die Anzahl und/oder Reihenfolge einer Durchführung von Vermeidungsmöglichkeiten als auch die Art, welche Vermeidungsmöglichkeit durchgeführt werden soll, Berücksichtigung finden. Es wird bei dieser vorteilhaften Ausführung insbesondere vorgesehen, dass dieses Auswerten, ob das Objekt statisch oder dynamisch ist, in der Zeitphase des Durchführens des Fahrstufenwechsels und/oder in der Zeitphase nach dem erfolgten Fahrstufenwechsel bis hin zu dem Zeitpunkt, zu dem sich das Fahrzeug dann aus dem Stillstand in Richtung der durch den Fahrstufenwechsel einhergehenden Fortbewegungsrichtung fortbewegt, erfolgt.

Vorteilhafterweise wird bei einem Erkennen eines dynamischen Objekts ausgewertet, ob sich das Objekt aus der Fortbewegungsrichtung herausbewegt oder nicht, und abhängig davon wird die Kollisionsvermeidungsaktion durchgeführt. So kann bei dieser vorteilhaften Ausführung dann auch sogar noch berücksichtigt werden, ob ausgehend von dem Zeitpunkt und somit einer ersten Position des Objekts zum Fahrzeug gegebenenfalls nur noch kurzzeitig auf einem Kollisionskurs befindet und aufgrund des Bewegungsszenarios des Fahrzeugs und/oder des Objekts damit zu rechnen ist, dass eine Kollision aufgrund dieser Bewegungsszenarien des Objekts und/oder des Fahrzeugs ohne Durchführung einer Kollisionsvermeidungsaktion vermieden wird oder ob gegebenenfalls nur die erste und/oder nur die zweite Vermeidungsmöglichkeit durchgeführt werden muss und/oder ob gegebenenfalls dann auch noch die dritte Vermeidungsmöglichkeit, wie sie oben in vorteilhaften Ausführungen genannt wurden, durchgeführt werden muss. Es kann in dem Zusammenhang abhängig von dem Abstand des Objekts zum Fahrzeug und/oder abhängig von der Geschwindigkeit des Objekts und/oder abhängig von der Geschwindigkeit des Fahrzeugs dann die jeweilige Strategie zur individuellen Zusammenstellung und Durchführung der Kollisionsvermeidungsaktion im Hinblick auf die vorzugsweise bereitgestellten mehreren und oben genannten Vermeidungsmöglichkeiten erfolgen. Damit wird möglichst wenig in das Fahrverhalten des Fahrzeugs eingegriffen, sodass bei einer der kritischen Kollisionsszenarien gegebenenfalls dann nur eine Warnung ausreicht, bei anderen jedoch ein bedarfsgerechteres automatisches Eingreifen des Fahrerassistenzsystems in das Fahrverhalten des Fahrzeugs erfolgt. Es soll in dem Zusammenhang vermieden werden, dass unnötige automatische und nicht erforderliche Eingriffe in das Fahrverhalten und das Fahrzeug durch das Fahrerassistenzsystem durchgeführt werden, durch welche der Fahrzeugführer gegebenenfalls erschrocken wird. Anderseits soll jedoch nicht zu wenig eingegriffen werden, um dann auch zuverlässig die Kollision zu vermeiden.

In einer vorteilhaften Ausführung wird im Zusammenhang mit dem Wechsel der Fahrstufe auch eine Blickrichtung des Fahrzeugführers erfasst und die Blickrichtung für die Entscheidung, ob die Kollisionsvermeidungsaktion durchgeführt wird, berücksichtigt. Durch diese Ausgestaltung kann die Beurteilung, ob eine mit dem Wechsel der Fahrstufe zukünftig einhergehende Fortbewegungsrichtung des Fahrzeugs auch in gewissem Zusammenhang mit einem Fortbewegungswunsch des Fahrzeugführers steht, verbessert und präzisiert werden. Ist in dem Zusammenhang festzustellen, dass der Fahrzeugführer eine Blickrichtung hat, die von der Fortbewegungsrichtung um einen vorgebbaren Toleranzwert, insbesondere einen entsprechenden Toleranzwinkel, abweicht, so kann auf einen unerwünschten Fahrstufenwechsel und/oder auf einen bezüglich dem Führen des Fahrzeugs in die Fortbewegungsrichtung unaufmerksamen Fahrzeugführer geschlossen werden. In derartigen Situationen kann dann die Kollisionsvermeidungsaktion, insbesondere im Hinblick auf die Art einer Vermeidungsmöglichkeit und/oder im Hinblick auf die Anzahl von durchzuführenden Vermeidungsmöglichkeiten, schneller und/oder umfänglicher erfolgen.

In dem Zusammenhang kann gerade bei Situationen, bei denen ein Fahrzeugführer unerwünschterweise eine Fahrstufe einlegt, die eine Fortbewegungsrichtung aufweist, andererseits die Blickrichtung beispielsweise zumindest im Wesentlichen in die entgegengesetzte Richtung erfolgt, auf eine dann nachfolgende, sehr kritische Verkehrssituation geschlossen werden, insbesondere wenn sich dann ein Objekt im Umgebungsbereich des Fahrzeugs in Fortbewegungsrichtung befindet. So kann es beispielsweise sehr kritisch sein, wenn ein Fahrzeugführer eine Fahrstufe einlegt, die eine Vorwärtsfahrt des Fahrzeugs nach sich ziehen würde, jedoch für sich gewollt eigentlich einen Rückwärtsgang und somit eine Fahrstufe zum rückwärtigen Fortbewegen des Fahrzeugs einlegen wollte und in Vermutung dessen dann einen Schulterblick vornimmt beziehungsweise mit einer Blickrichtung nach hinten orientiert ist. Würde dann im Nachfolgenden nämlich das Gaspedal durch den Fahrzeugführer betätigt, würde ein unerwünschtes nach vorne Bewegen des Fahrzeugs erfolgen, obwohl der Fahrzeugführer eigentlich mit einem rückwärtigen Fortbewegen rechnet. Um gerade dann eine Kollision mit einem im Bereich vor dem Fahrzeug befindlichen Objekt zu vermeiden und diesbezüglich keine lange Reaktionszeit des Fahrzeugführers abwarten zu müssen, ist in derartigen Situationen eine entsprechende Reaktion des Fahrerassistenzsystems von besonderem Vorteil.

In einer vorteilhaften Ausführung ist vorgesehen, dass dann, wenn die Blickrichtung des Fahrzeugführers nach dem Wechsel der Fahrstufe von der mit der gewählten Fahrstufe einhergehenden Fortbewegungsrichtung des Fahrzeugs von zumindest einem vorgebbaren Toleranzwert abweicht, zumindest eine von mehreren Vermeidungsmöglichkeiten der Kollisionsvermeidungsaktion durchgeführt wird.

Bei einer vorteilhaften Ausführung des Verfahrens kann auch vorgesehen sein, dass bei einem Erfassen eines Objekts im Umgebungsbereich des Fahrzeugs in einer Fortbewegungsrichtung des Fahrzeugs und einem Schwellwert, der dann das Durchführen einer Kollisionsvermeidungsaktion bedingt, zunächst keine Kollisionsvermeidungsaktion erfolgt, wenn unverzüglich bzw. gleichzeitig eine die Kollisionswahrscheinlichkeit mindernde Reaktion des Fahrzeugführers im Hinblick auf das Fahrverhalten des Fahrzeugs erfolgt, beispielsweise ein Abbremsen des Fahrzeugs erfolgt. Es kann dann auch bei einem weiteren Annähern des Fahrzeugs an das Objekt keine Kollisionsvermeidungsaktion durchgeführt wird, wenn weitere Kriterien erfüllt sind. Dies kann dann insbesondere bis zu einem Schwellwertabstand des Fahrzeugs zum Objekt durchgeführt werden. Unterschreitet dann das Fahrzeug jedoch diesen Schwellwert und erfolgt dann kein unmittelbares Abbremsen des Fahrzeugs zum Stillstand, wird dann wiederum entschieden, eine Kollisionsvermeidungsaktion durchzuführen.

Bei den erläuterten Ausführungen des Verfahrens gelten die jeweiligen Optionen sowohl für ein Objekt, welches sich im Vorfeld des Fahrzeugs befindet, als auch für ein Objekt, welches sich hinter dem Fahrzeug befindet, sodass sowohl bei einer Vorwärtsfahrt als Fortbewegungsrichtung als auch bei einer Rückwärtsfahrt als Fortbewegungsrichtung die Aspekte, wie sie genannt wurden, Gültigkeit haben.

Darüber hinaus kann es auch vorgesehen sein, dass eine Entscheidung über eine Kollisionsvermeidungsaktion erfolgt, wenn ein Objekt in einem Erfassungsbereich einer Erfassungseinheit des Fahrerassistenzsystems erfasst wird und diese Position dann in Fortbewegungsrichtung des Fahrzeugs nach einem Fahrstufenwechsel ist, und das Objekt dann zumindest einmal alternierend aus dem Erfassungsbereich heraustritt und dann wieder eintritt oder in den Erfassungsbereich eintritt und dann wieder austritt.

Die Erfassungseinheit des Fahrerassistenzsystems kann einen oder mehrere Ultraschallsensoren und/oder eine oder mehrere Kameras aufweisen. Zusätzlich oder anstatt dazu kann die Erfassungseinheit auch einen oder mehrere Radarsensoren aufweisen. Auch eine Erfassungseinheit mit einem Laserscanner kann vorgesehen sein.

Des Weiteren betrifft die Erfindung auch ein Fahrerassistenzsystem mit zumindest einer Erfassungseinheit zum Erfassen eines Umgebungsbereichs eines Fahrzeugs. Das Fahrerassistenzsystem umfasst darüber hinaus auch eine Auswerteeinheit zum Auswerten von im Umgebungsbereich erfassten Informationen. Das Fahrerassistenzsystem ist zum Durchführen eines erfindungsgemäßen Verfahrens oder einer vorteilhaften Ausgestaltung davon ausgebildet.

Des Weiteren betrifft die Erfindung auch ein Kraftfahrzeug mit einem erfindungsgemäßen Fahrerassistenzsystem oder einer vorteilhaften Ausgestaltung davon.

Weitere Merkmale der Erfindung ergeben sich aus den Ansprüchen, den Figuren und der Figurenbeschreibung.

Dabei zeigen:
- Fig. 1: eine schematische Draufsicht auf ein erstes Verkehrsszenario mit einem Fahrzeug und einem Objekt zu einem ersten Zeitpunkt;
- Fig. 2: eine Draufsicht auf das Verkehrsszenario gemäß Fig. 1 in einem zu Fig. 1 unterschiedlichen nachfolgenden Zeitpunkt;
- Fig. 3: eine schematische Draufsicht auf ein weiteres Ausführungsbeispiel eines Verkehrsszenarios zu einem ersten Zeitpunkt;
- Fig. 4: eine Draufsicht auf das Verkehrsszenario gemäß Fig. 3 in einem zu Fig. 3 unterschiedlichen nachfolgenden zweiten Zeitpunkt;
- Fig. 5: eine schematische Draufsicht auf ein Verkehrsszenario gemäß Fig. 3 und Fig. 4 in einem zu Fig. 4 nachfolgenden weiteren Zeitpunkt;
- Fig. 6: eine schematische Draufsicht auf ein weiteres Ausführungsbeispiel eines Verkehrsszenarios zu einem ersten Zeitpunkt;
- Fig. 7: eine schematische Draufsicht auf das Verkehrsszenario gemäß Fig. 6 in einem dazu unterschiedlichen nachfolgenden weiteren Zeitpunkt;
- Fig. 8: eine Draufsicht auf das Verkehrsszenario gemäß Fig. 6 und Fig. 7 in einem zu Fig. 7 unterschiedlichen weiteren nachfolgenden Zeitpunkt;
- Fig. 9: eine schematische Draufsicht auf ein nochmals weiteres Ausführungsbeispiel eines Verkehrsszenarios zu einem ersten Zeitpunkt; und
- Fig. 10: eine Draufsicht auf das Verkehrsszenario gemäß Fig. 9 in einem zu Fig. 9 unterschiedlichen nachfolgenden Zeitpunkt.

In den Figuren werden gleiche oder funktionsgleiche Elemente mit den gleichen Bezugszeichen versehen.

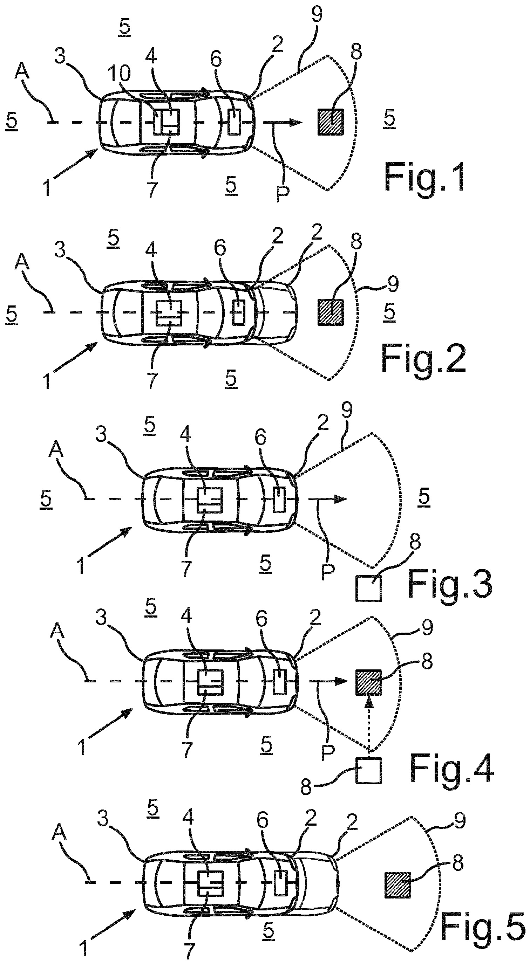

In Fig. 1 ist in einer Draufsichtdarstellung eine Verkehrssituation gezeigt, bei welcher ein Kraftfahrzeug 1 insbesondere im Stillstand sich befindet. Das Kraftfahrzeug 1 umfasst eine Längsachse A und in Richtung dieser Längsachse A einen Frontbereich 2 und einen Heckbereich 3. Das Fahrzeug 1 umfasst darüber hinaus ein Fahrerassistenzsystem 4, welches insbesondere als Kollisionsvermeidungssystem ausgebildet ist. Das Fahrerassistenzsystem 4 umfasst zumindest eine Erfassungseinheit 7, die nicht dargestellte Ultraschallsensoren und/oder Radarsensoren und/oder Kameras und/oder Laserscanner aufweisen kann.

Durch diese Erfassungseinheit 7 kann ein Umgebungsbereich 5 des Kraftfahrzeugs erfasst werden.

Das Kraftfahrzeug 1 umfasst darüber hinaus auch eine Antriebseinheit 6, welche Räder des Kraftfahrzeugs 1 antreibt.

Die Erfassungseinheit 7, die in Fig. 1 sowohl örtlich als auch im Hinblick auf ihre Anzahl lediglich symbolhaft gezeigt ist und zu verstehen ist, ist zur Erfassung des Umgebungsbereichs 5 ausgebildet.

Bei dem in Fig. 1 gezeigten Ausführungsbeispiel wird zu einem Zeitpunkt t0 ein Wechsel einer Fahrstufe des Fahrzeugs 1 durchgeführt. Als ein Kollisionskriterium bezüglich einer Kollision des Fahrzeugs 1 mit einem in dem Umgebungsbereich 5 befindlichen Objekt 8 wird dieser Fahrstufenwechsel ausgewertet. Dazu wird überprüft, ob die dann mit der gewählten Fahrstufe, die nach dem Wechsel dann vorhanden ist, einhergehende Fortbewegungsrichtung des Kraftfahrzeugs 1 in Richtung eines im Umgebungsbereich 5 des Fahrzeugs 1 erfassten Objekts 8 ist. Im gezeigten Ausführungsbeispiel ist das Fahrzeug 1 zum Zeitpunkt t0 im Stillstand und es wird beispielhaft ein Fahrstufenwechsel dahingehend durchgeführt, dass von einem Rückwärtsgang in einen Vorwärtsgang gewechselt wird. Das Fahrzeug 1 weist demzufolge dann zwingend im Nachfolgenden eine Fortbewegungsrichtung auf, die einer Vorwärtsrichtung und somit einer Vorwärtsfahrt entspricht. Bei dem gezeigten Ausführungsbeispiel ist vorgesehen, dass in einem Erfassungsbereich 9 in der Erfassungseinheit 7 dieses Objekt 8 erfasst wird und sich dieses Objekt 8 dann auch in dieser Fortbewegungsrichtung P im zukünftigen Fahrschlauch des Fahrzeugs 1 befindet. Dieses Überprüfungsergebnis, ob sich in dieser Fortbewegungsrichtung P das Objekt 8 befindet, wird für die Entscheidung berücksichtigt, ob eine Kollisionsvermeidungsaktion des Fahrerassistenzsystem 4 durchgeführt wird oder nicht. Insbesondere wird dies auch dahingehend berücksichtigt, auf welche Art und Weise die Kollisionsvermeidungsaktion durchgeführt wird.

Im gezeigten Ausführungsbeispiel wird daher festgestellt, dass sich noch im Stillstand des Fahrzeugs 1 und bereits mit dem Wechsel der Fahrstufe sowie auch nachher, ein insbesondere statisches Objekt 8 dann in Richtung vor dem Fahrzeug 1 und somit in Fortbewegungsrichtung P befindet und somit auf Kollisionskurs zu dem Fahrzeug 1 wäre, wenn sich dieses im Nachgang in Richtung der Fortbewegungsrichtung P bewegt.

Erfindungsgemäß ist vorgesehen, dass für die Entscheidung, ob eine Kollisionsvermeidungsaktion durchgeführt wird, zusätzlich zu dem Überprüfungsergebnis des Kollisionskriteriums ein Erfülltsein eines Zusatzkriteriums berücksichtigt wird. Insbesondere kann als Zusatzkriterium dabei ausgewertet werden, ob eine Drehmomentänderung einer Antriebseinheit 6 des Fahrzeugs 1 in einem kurzen, an den Abschluss des Fahrstufenwechsels direkt anschließenden vorgebbaren Zeitintervall einen Drehmomentänderungsschwellwert überschreitet oder gleich diesem ist. Es wird dann, wenn die mit dem Fahrstufenwechsel einhergehende Fortbewegungsrichtung P des Fahrzeugs 1 in Richtung des Objekts 8 führt und diese Drehmomentänderung den Drehmomentänderungsschwellwert überschreitet, die Kollisionsvermeidungsaktion insbesondere durchgeführt. So kann in dem Zusammenhang dann beispielsweise zu einem Zeitpunkt t1, der nach dem Zeitpunkt t0 liegt, eine derartige Drehmomentänderung erfasst werden. Beispielsweise kann dies dann der Fall sein, wenn der Fahrzeugführer ein Gaspedal betätigt. Insbesondere ist hierbei dann vorgesehen, dass der Drehmomentänderungsschwellwert als ein Drehmoment vorgegeben wird, wie er bei einem Abrutschen eines Fußes eines Fahrzeugführers von einem zum Gaspedal unterschiedlichen Pedal des Fahrzeugs 1, beispielsweise einem Bremspedal, auf das Gaspedal und einem damit verbundenen abrupten starken Betätigen des Gaspedals auftritt.

Zusätzlich oder anstatt dazu kann als Zusatzkriterium ausgewertet werden, ob sich das Fahrzeug 1 innerhalb eines vorgebbaren Zeitintervalls nach dem Fahrstufenwechsel tatsächlich fortbewegt und wenn ja, ob die Geschwindigkeit größer einer Schwellwertgeschwindigkeit ist, wobei dann, wenn die mit dem Fahrstufenwechsel einhergehende Fortbewegungsrichtung des Fahrzeugs in Richtung des Objekts 8 führt und die Geschwindigkeit des Fahrzeugs 1 größer der Schwellwertgeschwindigkeit ist, die Kollisionsvermeidungsaktion durchgeführt wird.

Erfindungsgemäß ist zusätzlich vorgesehen, dass die Kollisionsvermeidungsaktion mit zumindest zwei verschiedenen Vermeidungsmöglichkeiten bereitgestellt wird und abhängig von einem Auswahlkriterium ausgewählt wird, mit welcher Vermeidungsmöglichkeit und/oder mit welcher Anzahl von bereitgestellten Vermeidungsmöglichkeiten die Kollisionsvermeidungsaktion durchgeführt wird und/oder abhängig von dem Auswahlkriterium ausgewählt wird, in welcher Reihenfolge eine Mehrzahl von Vermeidungsmöglichkeiten beim Durchführen einer Kollisionsvermeidungsaktion ausgeführt wird.

Insbesondere kann vorgesehen sein, dass als eine erste Vermeidungsmöglichkeit eine akustische und/oder optische Warnung bereitgestellt wird und diese erste Vermeidungsmöglichkeit nur diese Warnung betrifft. Zusätzlich oder anstatt dazu kann eine zweite Vermeidungsmöglichkeit ein Fortbewegen des Fahrzeugs 1 kleiner einem vorgebbaren Fortbewegungsschwellwert sein, wobei dieses Fortbewegen automatisch durch das Fahrerassistenzsystem 4 erfolgen kann oder aber auch durch den Fahrzeugführer bedingt erfolgen kann. Zusätzlich oder anstatt dazu kann vorgesehen sein, dass als eine dritte Vermeidungsmöglichkeit ein Abbremsen des Fahrzeugs 1 bis zum Stillstand durch das Fahrerassistenzsystem 4 eingestellt wird und somit in dem Sinne ein autonomer Eingriff in das Fahrverhalten des Fahrzeugs 1 durch das Fahrerassistenzsystem 4 durchgeführt wird. Dies kann auch bei dem Durchführen einer zweiten Vermeidungsmöglichkeit erfolgen und in dem Zusammenhang auch ein autonomes Begrenzen der Geschwindigkeit kleiner dem Fortbewegungsschwellwert durch das Fahrerassistenzsystem 4 erfolgen.

In vorteilhafter Weise kann als Auswahlkriterium ein Abstand des Objekts 8 zum Fahrzeug 1 und/oder die relative Position des Objekts 8 zum Fahrzeug 1 berücksichtigt werden.

Dies trifft bei einem statischen Objekt 8 zu, wie es in Fig. 1 erläutert wurde.

Zusätzlich oder anstatt dazu kann als Auswahlkriterium auch eine Bewegungsrichtung eines Objekts zum Fahrzeug 1 und/oder eine Bewegungsgeschwindigkeit des Objekts zum Fahrzeug 1 berücksichtigt werden, wenn das Objekt 8 ein sich selbst bewegendes Objekt ist und somit ein dynamisches Objekt ist.

In vorteilhafter Weise ist auch vorgesehen, dass im Zusammenhang mit dem Wechsel der Fahrstufe auch eine Blickrichtung des Fahrzeugführers erfasst wird und die Blickrichtung für die Entscheidung, ob die Kollisionsvermeidungsaktion durch ein Fahrerassistenzsystem 4 durchgeführt wird, berücksichtigt wird. Die Blickrichtung kann in dem Zusammenhang beim Durchführen des Fahrstufenwechsels und/oder auch in einem vorgebbaren Zeitintervall nach dem Abschließen des Fahrstufenwechsels und im direkten Anschluss dieses Zeitintervalls an das Ende des Fahrstufenwechsels erfolgen.

Dies bedeutet bei dem Ausführungsbeispiel gemäß Fig. 1, dass dann beispielsweise gemäß der Darstellung in Fig. 2, wenn sich das Fahrzeug 1 dann tatsächlich fortbewegt, abhängig von einem derartigen oben beispielhaft genannten Auswahlkriterium dann das Durchführen einer Kollisionsvermeidungsaktion bestimmt wird. So kann in dem Zusammenhang abhängig von dem Abstand des Fahrzeugs 1 zum Objekt 8 bei dem dann noch auftretenden Stillstand des Fahrzeugs 1 gegebenenfalls nur eine erste Vermeidungsmöglichkeit durchgeführt werden. Insbesondere kann dann auch abhängig von der Geschwindigkeit bei diesem Fortbewegen und einem dann gegebenenfalls Unterschreiten eines Abstandsschwellwerts des Fahrzeugs 1 zum Objekt 8 auch die dritte Vermeidungsmöglichkeit durchgeführt werden. In Fig. 1 ist in transparenter Darstellung die Position des Fahrzeugs 1 gezeigt, wenn sich dieses aus dem Stillstand in Richtung des Objekts 8 fortbewegt hat. Die Blickrichtung des Fahrzeugführers kann beispielsweise mit einer Kamera im Innenraum des Fahrzeugs 1 erfasst werden. Es kann in dem Zusammenhang dann vorgesehen sein, dass dann, wenn die Blickrichtung des Fahrzeugführers nach dem Wechsel der Fahrstufe von der mit der gewählten Fahrstufe einhergehenden Fortbewegungsrichtung P des Fahrzeugs 1 um zumindest einen vorgebbaren Toleranzwert abweicht, zumindest eine von mehreren Vermeidungsmöglichkeiten der Kollisionsvermeidungsaktion durchgeführt wird. Ein derartiger Toleranzwert kann insbesondere ein Winkel zwischen der Fortbewegungsrichtung P, die insbesondere abhängig von einem aktuellen Lenkwinkeleinschlag des Fahrzeugs 1 an einschlagbaren Rädern bestimmt wird beziehungsweise dem entspricht, und der Richtung, in die der Fahrzeugführer blickt, durchgeführt werden. Beispielsweise kann der Toleranzwert 30°, insbesondere zwischen 25° und 45°, betragen.

In einer vorteilhaften Ausführung kann zusätzlich auch die Fortbewegung des Fahrzeugs 1 ausgehend von dem Stillstand ausgewertet werden, und wenn sich dann eine Abweichung von der Fortbewegungsrichtung P, die beim Stillstand vorhergesagt wurde, ergibt, kann dies bei der Kollisionsvermeidungsaktionsentscheidung berücksichtigt werden und in dem Zusammenhang dann eine Kollisionsvermeidungsaktion später und/oder mit anderen Vermeidungsmöglichkeiten erfolgen.

In Fig. 3 ist in einer weiteren schematischen Draufsichtdarstellung ein weiteres Ausführungsbeispiel eines Verkehrsszenarios gezeigt. Hier ist zu einem Zeitpunkt t0, zu welchem ein Wechsel einer Fahrstufe durchgeführt wird, in dem Umgebungsbereich 5 und insbesondere in dem Erfassungsbereich 9 der Erfassungseinheit 7 kein Objekt vorhanden beziehungsweise es ist keines erfasst. Ist auch hier ein Fahrstufenwechsel in einen Vorwärtsgang erfolgt, so ist somit in Fortbewegungsrichtung P gegenwärtig kein Objekt enthalten. Das Objekt 8 befindet sich hier außerhalb der Fortbewegungsrichtung, sodass im Fahrschlauch des Fahrzeugs 1 keine Kollision mit dem Objekt 8 auftritt.

In der Darstellung gemäß Fig. 4 ist dann im Ausführungsbeispiel vorgesehen, dass auch im Stillstand des Fahrzeugs 1, jedoch nach dem Abschluss des Fahrstufenwechsels und vor dem Fortbewegen des Fahrzeugs 1 in der mit dem Fahrstufenwechsel einhergehenden Fortbewegungsrichtung P, sich das Objekt 8 bewegt und in den Erfassungsbereich 9 eintritt. In diesem Ausführungsbeispiel tritt daher eine Situation auf, bei welcher ausgehend von dem Stillstand des Fahrzeugs 1 und vor dem Fortbewegen in Fortbewegungsrichtung P ein dynamisches Objekt sich derart zum Fahrzeug 1 positioniert, dass es auf Kollisionskurs mit dem Fahrzeug 1 ist, wenn sich dieses in Fortbewegungsrichtung P nachfolgend bewegt. Auch dies wird dann durch die Erfassungseinheit 7 erfasst und es kann dann wiederum abhängig von Auswahlkriterien, wie sie oben genannt wurden, bereits unverzüglich eine Entscheidung zum Durchführen einer Kollisionsvermeidungsaktion erfolgen und dann die Kollisionsvermeidungsaktion unverzüglich erfolgen. Auch hier kann dann wiederum abhängig von den genannten Auswahlkriterien und/oder Zusatzkriterien entschieden werden, zu welchem Zeitpunkt dann die Kollisionsvermeidungsaktion durchgeführt wird und/oder mit welchen Vermeidungsmöglichkeiten die Kollisionsvermeidungsaktion durchgeführt wird.

Wird beispielsweise dann zu einem Zeitpunkt t2 das Fahrzeug 1 tatsächlich in Fortbewegungsrichtung P bewegt, erfolgt dann wiederum das Szenario, wie es beispielsweise zu Fig. 2 erläutert wurde. Dies setzt dann wiederum beispielhaft voraus, dass das Objekt 8 weiterhin statisch sich in dem Erfassungsbereich 9 aufhält.

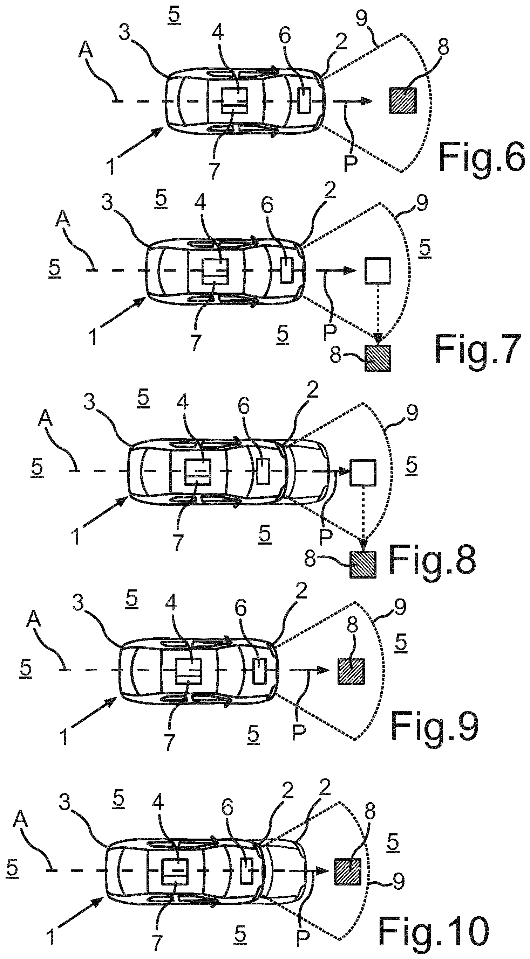

In Fig. 6 ist in einer schematischen Draufsicht ein weiteres Verkehrsszenario gezeigt, bei welchem zu einem Zeitpunkt t0 ein Wechsel der Fahrstufe durchgeführt wird und von einem Rückwärtsgang in einen Vorwärtsgang gewechselt wird, mit welchem die eingezeichnete Fortbewegungsrichtung P einhergeht.

In diesem Ausführungsbeispiel ist dann vorgesehen, dass zum Zeitpunkt t0 das Objekt 8 in dem Erfassungsbereich 9 sich bereits befindet. Das Fahrzeug 1 ist hier zum Zeitpunkt t0 im Stillstand.

Vor einem Fortbewegen des Fahrzeugs 1 aus dem Stillstand erfolgt dann zu einem Zeitpunkt t1, wie in Fig. 7 gezeigt ist, ein Bewegen des Objekts 8 aus dem Erfassungsbereich 9 heraus. Dies bedeutet, dass vor dem tatsächlichen Fortbewegen des Fahrzeugs 1 sich das Objekt 8 derart bewegt hat, dass mit dem sich dann nachfolgend bewegenden Fahrzeug 1 keine Kollision mehr auftreten kann. Bei dieser Ausgestaltung wird dann mit dem Beurteilungsszenario, ob eine Kollisionsvermeidungsaktion durchgeführt wird, erkannt beziehungsweise entschieden, dass weder zum Zeitpunkt t1 eine derartige Kollisionsvermeidungsaktion durchgeführt werden muss, noch zu einem nachfolgenden Zeitpunkt t2.

Auch hier wird in vorteilhafter Weise auch zu den Zeitpunkten t1 und t2 wie auch dazwischenliegend der Umgebungsbereich 5 weiterhin erfasst, um auch dann mit Beginn des Fortbewegens des Fahrzeugs 1 und während des Fortbewegens neue Objekte oder eine weitere Bewegung des Objekts 8 erfassen zu können und darauf dann individuell reagieren zu können.

Die Entscheidung, ob dann jeweils eine Kollisionsvermeidungsaktion durchgeführt wird und somit auch dann, wann und gegebenenfalls in welchem Umfang eine derartige Kollisionsvermeidungsaktion durchgeführt wird, kann dann auch wiederum anhand der oben genannten erläuterten Szenarien erfolgen, insbesondere dann unter Berücksichtigung der Auswahlkriterien und/oder Zusatzkriterien.

In dem Zusammenhang können dann auch selbstverständlich Verkehrsszenarien erfasst werden, bei denen ein Objekt 8 aus dem Erfassungsbereich 9 heraustritt und dann im Weiteren jedoch wiederum in den Erfassungsbereich 9 hineintritt. Ebenso können Szenarien erfasst werden, bei denen ein Objekt 8 in den Erfassungsbereich 9 hineintritt und dann wiederum aus diesem Erfassungsbereich heraustritt. Jeweils abhängig davon, ob sich das Fahrzeug 1 dann nach dem Fahrstufenwechsel zu den jeweiligen Zeitpunkten im Stillstand befindet oder bereits fortbewegt wird, kann dann wiederum der Zeitpunkt einer Kollisionsvermeidungsaktion und/oder die Anzahl von dann durchzuführenden Vermeidungsmöglichkeiten und/oder die Reihenfolge von mehreren durchzuführenden Vermeidungsmöglichkeiten und/oder welche der mehreren Vermeidungsmöglichkeiten durchgeführt werden, individuell entschieden werden.

In Fig. 9 ist in einer Draufsichtdarstellung ein weiteres beispielhaftes Verkehrsszenario gezeigt, bei welchem das Fahrzeug 8 sich insbesondere wiederum im Stillstand befindet, ein Fahrstufenwechsel von einem Rückwärtsgang in einen Vorwärtsgang erfolgt ist und in einem Erfassungsbereich 9 vor dem Fahrzeug 1 ein Objekt 8, insbesondere ein statisches Objekt 8, erfasst wurde, sodass dieses bei einem erfolgenden Fortbewegen des Fahrzeugs 1 auf Kollisionskurs zu dem Fahrzeug 1 wäre.

Erfolgt dann bei dieser Ausgestaltung, beispielsweise aufgrund eines noch ausreichenden Abstands des Fahrzeugs 1 zu dem Objekt 8 bei einem dann gemäß der Darstellung in Fig. 10 erfolgenden tatsächlichen Fortbewegen in Fortbewegungsrichtung P ein Annähern an das Objekt 8, welches insbesondere dann immer noch statisch ist, auch ein fahrzeugnutzerinitiiertes Abbremsen des Fahrzeugs 1, so kann dies durch das Fahrerassistenzsystem 4 dahingehend ausgewertet werden, dass der Fahrzeugführer selbst das Objekt 8 auf Kollisionskurs zum Fahrzeug 1 erkannt hat. Erfolgt dann zu einem nachfolgenden weiteren Zeitpunkt jedoch dann wiederum ein Beschleunigen des Fahrzeugs 1 in Fortbewegungsrichtung P und somit auf das Objekt 8 zu, so wird dann durch das Fahrerassistenzsystem 4 anhand der genannten Kriterien eine Entscheidung getroffen, ob eine Kollisionsvermeidungsaktion durchgeführt wird. Auch hier wird dann wiederum im Hinblick auf die tatsächliche Entscheidung auf die oben genannten beispielhaften Erläuterungen verwiesen, die hier in entsprechender Weise ablaufen können.

Durch die Ausführungen beziehungsweise darüber hinausgehende Beispiele können auch Objekte 8 an den Grenzen eines Erfassungsbereichs 9 erfasst werden und auch dann eine entsprechend hinreichend genaue Entscheidung getroffen werden, ob eine Kollisionsvermeidungsaktion durchgeführt werden soll oder nicht. Auch hier kann dann, wenn eine Kollisionsvermeidungsaktion durchgeführt wird, wieder individuell entschieden werden, in welchem Umfang und in welcher Intensität dies zu erfolgen hat. Auch dies erfolgt dann insbesondere jeweils automatisch durch das Fahrerassistenzsystem 4, wobei dieses neben der Erfassungseinheit 7 auch eine Auswerteeinheit 10, wie sie beispielhaft und der Übersichtlichkeit dienend nur in Fig. 1 eingezeichnet ist, aufweist.

Ganz allgemein ist somit auch vorgesehen, dass die Entscheidung, ob eine Kollisionsvermeidungsaktion durchgeführt wird und/oder wenn sie durchgeführt wird, in welchem Umfang die Kollisionsvermeidungsaktion durchgeführt wird, auch abhängig davon erfolgen kann, ob das Fahrzeug 1 zum Zeitpunkt, zu dem ein Objekt 8 auf Kollisionskurs zum Fahrzeug 1 erkannt wird, sich noch im Stillstand befindet oder sich bewegt. Es können sich in dem Zusammenhang dann auch unterschiedliche Kollisionswahrscheinlichkeiten ergeben, die für die Entscheidung bezüglich der Kollisionsvermeidungsaktion berücksichtigt werden können.

## Patentansprüche

1. Verfahren zum Vermeiden einer Kollision eines Fahrzeugs (1) mit einem Objekt (8) in einem Umgebungsbereich (5) des Fahrzeugs (1), bei welchem abhängig von einem Erfüllt sein eines Kollisionskriteriums ein Durchführen einer Kollisionsvermeidungsaktion entschieden wird,
wobei ein Wechsel einer Fahrstufe des Fahrzeugs (1) durchgeführt wird und als Kollisionskriterium der Fahrstufenwechsel ausgewertet wird und dazu überprüft wird, ob die dann mit der gewählten Fahrstufe einhergehende Fortbewegungsrichtung (P) des Fahrzeugs (1) in Richtung eines im Umgebungsbereich (5) des Fahrzeugs (1) erfassten Objekts (8) ist, wobei dieses Überprüfungsergebnis für eine Entscheidung, ob die Kollisionsvermeidungsaktion automatisch durchgeführt wird, berücksichtigt wird,
wobei die Kollisionsvermeidungsaktion mit zumindest zwei verschiedenen Vermeidungsmöglichkeiten bereitgestellt wird und abhängig von einem Auswahlkriterium ausgewählt wird, mit welcher Vermeidungsmöglichkeit und/oder mit welcher Anzahl von bereitgestellten Vermeidungsmöglichkeiten die Kollisionsvermeidungsaktion durchgeführt wird und/oder abhängig von dem Auswahlkriterium ausgewählt wird, in welcher Reihenfolge eine Mehrzahl von Vermeidungsmöglichkeiten beim Durchführen einer Kollisionsvermeidungsaktion ausgeführt wird, wobei eine Erfassung des Umgebungsbereichs (5) des Fahrzeugs (1) im Hinblick auf ein Vorhandensein eines Objekts (8) zumindest mit dem Erfassen eines erfolgenden Fahrstufenwechsels beginnt und bei einem Erfassen eines Objekts (8) in dem Umgebungsbereich (5) ausgewertet wird, ob das Objekt (8) statisch oder dynamisch ist, wobei bei einem Erkennen eines dynamischen Objekts (8) ausgewertet wird, ob sich das Objekt (8) unterschiedlich zur Fortbewegungsrichtung (P) bewegt oder nicht und abhängig davon die Kollisionsvermeidungsaktion durchgeführt wird, **dadurch gekennzeichnet, dass**
für die Entscheidung, ob eine Kollisionsvermeidungsaktion durchgeführt wird, zusätzlich zum Überprüfungsergebnis des Kollisionskriteriums ein Erfülltsein eines Zusatzkriteriums berücksichtigt wird, und dass
als Zusatzkriterium ausgewertet wird, ob eine Drehmomentänderung einer Antriebseinheit (6) des Fahrzeugs (1) nach dem Wechsel der Fahrstufe einen Drehmomentänderungsschwellwert überschreitet oder gleich diesem ist, wobei dann, wenn die mit dem Fahrstufenwechsel einhergehende Fortbewegungsrichtung (P) des Fahrzeugs (1) in Richtung des Objekts (8) führt und die Drehmomentänderung den Drehmomentänderungsschwellwert überschreitet, die Kollisionsvermeidungsaktion durchgeführt wird.

2. Verfahren nach Anspruch 1,
**dadurch gekennzeichnet, dass**
der Drehmomentänderungsschwellwert als ein Drehmoment vorgegeben wird, wie er bei einem Abrutschen eines Fußes eines Fahrzeugführers von einem zum Gaspedal unterschiedlichen Pedal des Fahrzeugs (1) auf das Gaspedal und einem damit verbundenen abrupten starken Betätigen des Gaspedals auftritt.

3. Verfahren nach Anspruch 1 oder 2,
**dadurch gekennzeichnet, dass**
als Zusatzkriterium zusätzlich ausgewertet wird, ob sich das Fahrzeug (1) nach dem Fahrstufenwechsel tatsächlich fortbewegt und wenn ja, ob die Geschwindigkeit größer einer Schwellwertgeschwindigkeit ist, wobei dann, wenn die mit dem Fahrstufenwechsel einhergehende Fortbewegungsrichtung (P) des Fahrzeugs (1) in Richtung des Objekts (8) führt und die Geschwindigkeit größer der Schwellwertgeschwindigkeit ist, die Kollisionsvermeidungsaktion durchgeführt wird.

4. Verfahren nach einem der Ansprüche 1 bis 3,
**dadurch gekennzeichnet, dass**
als eine erste Vermeidungsmöglichkeit eine akustische und/oder optische Warnung bereitgestellt wird und/oder als eine zweite Vermeidungsmöglichkeit ein Fortbewegen des Fahrzeugs (1) kleiner einem Fortbewegungsschwellwert durch ein Fahrerassistenzsystem (4) des Fahrzeugs (1) eingestellt wird und/oder als eine dritte Vermeidungsmöglichkeit ein Abbremsen bis zum Stillstand des Fahrzeugs (1) durch ein Fahrerassistenzsystem (4) des Fahrzeugs (1) eingestellt wird.

5. Verfahren nach einem der Ansprüche 1 bis 4,
**dadurch gekennzeichnet, dass**
als Auswahlkriterium ein Abstand des Objekts (8) zum Fahrzeug (1) und/oder eine Bewegungsrichtung des Objekts (8) zum Fahrzeug (1) und/oder eine Bewegungsgeschwindigkeit des Objekts (8) zum Fahrzeug (1) und/oder eine relative Position des Objekts (8) zum Fahrzeug (1) berücksichtigt werden.

6. Verfahren nach einem der vorherigen Ansprüche,
**dadurch gekennzeichnet, dass**
in Zusammenhang mit dem Wechsel der Fahrstufe auch eine Blickrichtung des Fahrzeugsführers erfasst wird und die Blickrichtung für die Entscheidung, ob die Kollisionsvermeidungsaktion durchgeführt wird, berücksichtigt wird.

7. Verfahren nach Anspruch 6,
**dadurch gekennzeichnet, dass**
dann, wenn die Blickrichtung des Fahrzeugsführers nach dem Wechsel der Fahrstufe von der mit der gewählten Fahrstufe einhergehenden Fortbewegungsrichtung (P) des Fahrzeugs (1) um zumindest einen vorgebbaren Toleranzwert abweicht, zumindest eine von mehreren Vermeidungsmöglichkeiten der Kollisionsvermeidungsaktion durchgeführt wird.

8. Fahrerassistenzsystem (4) mit zumindest einer Erfassungseinheit (7) zum Erfassen eines Umgebungsbereichs (5) eines Fahrzeugs (1), und mit einer Auswerteeinheit (10) zum Auswerten von im Umgebungsbereich (5) erfassten Informationen, wobei das Fahrerassistenzsystem (4) zum Durchführen eines Verfahrens nach einem der vorhergehenden Ansprüche ausgebildet ist.

9. Fahrzeug (1) mit einem Fahrerassistenzsystem (4) nach Anspruch 8.

## Claims

1. Method for preventing a collision of a vehicle (1) with an object (8) in a region (5) surrounding the vehicle (1), in which a decision to carry out a collision prevention action is made depending on a collision criterion being satisfied,
wherein a change in a speed level of the vehicle (1) is carried out and the change in speed level is evaluated as a collision criterion and a check is made as to whether the forward movement direction (P) of the vehicle (1) then accompanying the selected speed level is in the direction of an object (8) detected in the region (5) surrounding the vehicle (1), wherein this check result is taken into consideration for making a decision as to whether the collision prevention action is automatically carried out,
wherein the collision prevention action is provided with at least two different prevention options and, depending on a selection criterion, a selection is made as to the prevention option and/or the number of provided prevention options with which the collision prevention action is carried out and/or, depending on the selection criterion, a selection is made as to the order in which a plurality of prevention options are executed when carrying out a collision prevention action, wherein detection of the region (5) surrounding the vehicle (1) in respect of presence of an object (8) begins at least with the detection of a change in speed level having taken place and, when an object (8) is detected in the surrounding region (5), evaluation as to whether the object (8) is static or dynamic is performed, wherein,
when a dynamic object (8) is identified, evaluation as to whether the object (8) is moving in a different way to the forward movement direction (P) or not is performed and the collision prevention action is carried out depending on this evaluation, **characterized in that**,
for making the decision as to whether a collision prevention action is carried out, a situation of an additional criterion being satisfied is taken into consideration in addition to the check result of the collision criterion, and **in that**
evaluation as to whether a change in torque of a drive unit (6) of the vehicle (1) following the change in speed level exceeds or is equal to a threshold value for the change in torque is performed as an additional criterion, wherein the collision prevention action is carried out when the forward movement direction (P) of the vehicle (1) accompanying the change in speed level leads in the direction of the object (8) and the change in torque exceeds the threshold value for the change in torque.

2. Method according to Claim 1,
**characterized in that**
the threshold value for the change in torque is specified as a torque as occurs when a vehicle driver's foot slips from a pedal of the vehicle (1) that is different from the accelerator pedal onto the accelerator pedal and in association the accelerator pedal is abruptly strongly operated.

3. Method according to Claim 1 or 2,
**characterized in that**
evaluation as to whether the vehicle (1) is actually moved forward after the change in speed level is additionally performed as an additional criterion and, if yes, evaluation as to whether the speed is greater than a threshold speed is performed, wherein, when the forward movement direction (P) of the vehicle (1) accompanying the change in speed level leads in the direction of the object (8) and the speed is greater than the threshold speed, the collision prevention action is carried out.

4. Method according to any of Claims 1 to 3,
**characterized in that**
an acoustic and/or optical warning is provided as a first prevention option and/or moving of the vehicle (1) by less than a movement threshold value by a driver assistance system (4) of the vehicle (1) is set as a second prevention option and/or braking of the vehicle (1) to a standstill by a driver assistance system (4) of the vehicle (1) is set as a third prevention option.

5. Method according to any of Claims 1 to 4,
**characterized in that**
a distance of the object (8) from the vehicle (1) and/or a movement direction of the object (8) in relation to the vehicle (1) and/or a movement speed of the object (8) in relation to the vehicle (1) and/or a relative position of the object (8) in relation to the vehicle (1) are/is taken into consideration as a selection criterion/selection criteria.

6. Method according to any of the preceding claims,
**characterized in that**
in conjunction with the change in the speed level, a viewing direction of the vehicle driver is also detected and the viewing direction is taken into consideration for making the decision as to whether the collision prevention action is carried out.

7. Method according to Claim 6,
**characterized in that**
when the viewing direction of the vehicle driver, after the change in the speed level, deviates from the forward movement direction (P) of the vehicle (1) accompanying the selected speed level by at least one specifiable tolerance value, at least one of several prevention options of the collision prevention action is carried out.

8. Driver assistance system (4) having at least one detection unit (7) for detecting a region (5) surrounding a vehicle (1), and having an evaluation unit (10) for evaluating information detected in the surrounding region (5), wherein the driver assistance system (4) is designed to carry out a method according to any of the preceding claims.

9. Vehicle (1) having a driver assistance system (4) according to Claim 8.

## Revendications

1. Procédé permettant d'éviter une collision entre un véhicule (1) et un objet (8) dans une zone environnante (5) du véhicule (1), dans lequel il est décidé de l'exécution d'une action d'évitement de collision en fonction du fait qu'un critère de collision est satisfait,
dans lequel un changement d'une vitesse du véhicule (1) est effectué, et le changement de vitesse est évalué en tant que critère de collision, et à cet effet, il est vérifié si le sens de la marche (P) du véhicule (1), associé à la vitesse sélectionnée, va dans la direction d'un objet (8) détecté dans la zone environnante (5) du véhicule (1), dans lequel ce résultat de vérification est pris en compte pour une décision si l'action d'évitement de collision est effectuée automatiquement,
dans lequel l'action d'évitement de collision est fournie avec au moins deux possibilités d'évitement différentes, et en fonction d'un critère de sélection, on choisit avec quelle possibilité d'évitement et/ou avec quel nombre de possibilités d'évitement fournies l'action d'évitement de collision est effectuée, et/ou on sélectionne en fonction du critère de sélection dans quel ordre une pluralité de possibilités d'évitement est effectuée lors de l'exécution d'une action d'évitement de collision, dans lequel une détection de la zone environnante (5) du véhicule (1) en vue d'une présence d'un objet (8) commence au moins par la détection d'un changement de vitesse effectué, et lorsqu'un objet (8) est détecté dans la zone environnante (5), on évalue si l'objet (8) est statique ou dynamique, dans lequel
lors de la détection d'un objet dynamique (8), on évalue si l'objet (8) se déplace autrement que dans le sens de la marche (P) ou non, et l'action d'évitement de collision est effectuée en fonction de cela, **caractérisé en ce que**
pour la décision si une action d'évitement de collision sera effectuée, on tient compte en plus du résultat de vérification du critère de collision du fait qu'un critère supplémentaire est satisfait, et **en ce que**
comme critère supplémentaire on évalue si un changement de couple d'une unité d'entraînement (6) du véhicule (1) après le changement de la vitesse dépasse une valeur seuil de changement de couple ou est égal à celle-ci, dans lequel, si le sens de la marche (P) du véhicule (1), associé au changement de vitesse, va dans la direction de l'objet (8) et le changement de couple dépasse la valeur seuil de changement de couple, l'action d'évitement de collision est effectuée.

2. Procédé selon la revendication 1,
**caractérisé en ce que**
la valeur seuil de changement de couple est prédéfinie en tant que couple tel qu'il se produit lorsqu'un pied d'un conducteur dérape d'une pédale du véhicule (1), autre que l'accélérateur, vers l'accélérateur et en conséquence lors d'un actionnement fort et brusque de l'accélérateur.

3. Procédé selon la revendication 1 ou 2,
**caractérisé en ce que**
comme critère supplémentaire, on évalue de plus si le véhicule (1) se déplace réellement après le changement de vitesse, et si oui, si la vitesse est supérieure à une vitesse de valeur seuil, dans lequel, si le sens de la marche (P) du véhicule (1), associé au changement de vitesse, va dans la direction de l'objet (8) et la vitesse est supérieure à la vitesse de valeur seuil, l'action d'évitement de collision est effectuée.

4. Procédé selon l'une quelconque des revendications 1 à 3,
**caractérisé en ce que**
comme première possibilité d'évitement, un avertissement acoustique et/ou optique est fourni, et/ou comme deuxième possibilité d'évitement, un déplacement du véhicule (1) inférieur à une valeur seuil de déplacement est réglé par un système d'assistance au conducteur (4) du véhicule (1), et/ou comme troisième possibilité d'évitement, un freinage jusqu'à l'arrêt du véhicule (1) est réglé par un système d'assistance au conducteur (4) du véhicule (1) .

5. Procédé selon l'une quelconque des revendications 1 à 4,
**caractérisé en ce que**
comme critère de sélection, une distance de l'objet (8) par rapport au véhicule (1) et/ou une direction de mouvement de l'objet (8) par rapport au véhicule (1) et/ou une vitesse de mouvement de l'objet (8) par rapport au véhicule (1) et/ou une position relative de l'objet (8) par rapport au véhicule (1) sont prises en compte.

6. Procédé selon l'une quelconque des revendications précédentes,
**caractérisé en ce que**
qu'en liaison avec le changement de la vitesse, une direction du regard du conducteur est également détectée, et la direction du regard est prise en compte pour la décision si l'action d'évitement de collision sera effectuée.

7. Procédé selon la revendication 6,
**caractérisé en ce que**
si la direction du regard du conducteur après le changement de la vitesse dévie du sens de la marche (P) du véhicule (1), associé à la vitesse sélectionnée, au moins d'une première valeur de tolérance prédéfinissable, au moins l'une de plusieurs possibilités d'évitement de l'action d'évitement de collision est effectuée.

8. Système d'assistance au conducteur (4) comprenant au moins une unité de détection (7) pour détecter une zone environnante (5) d'un véhicule (1), et comprenant une unité d'évaluation (10) pour évaluer des informations détectées dans la zone environnante (5), dans lequel le système d'assistance au conducteur (4) est réalisé pour exécuter un procédé selon l'une quelconque des revendications précédentes.

9. Véhicule (1) comprenant un système d'assistance au conducteur (4) selon la revendication 8.
